# FASCICULE DE BREVET EUROPEEN

(11) **EP 3 067 273 B1**
(45) Date de publication et mention de la délivrance du brevet: **14.06.2017**
(21) Numéro de dépôt: 16159664.8
(22) Date de dépôt: 10.03.2016
(51) Int. Cl.: B64C 29/00

(54) **DRONE À VOILURE TOURNANTE DE TYPE TRICOPTER**
DREHFLÜGEL-DROHNE VOM TYP TRICOPTER
TRICOPTER ROTARY-WING DRONE

(30) Priorité: 13.03.2015 FR 1552077
(43) Date de publication de la demande: 14.09.2016
(73) Titulaire: EZNOV, 57070 Metz (FR)
(72) Inventeur: LAURENT, Eric, 78120 RAMBOUILLET (FR); LEGRAND, Thomas, 57000 METZ (FR)
(74) Mandataire: Hugues, Catherine

(56) Documents cités:
- US-A1- 2012 091 257
- US-A1- 2013 099 065

## Description

La présente invention a pour objet un drone à voilure tournante de type tricopter comportant trois bras reliés à un châssis par l'une de leurs extrémités et s'étendant dans le plan du châssis selon une configuration dans laquelle leurs extrémités libres se situent chacune à un sommet d'un triangle, chacune des extrémités libres supportant un rotor d'axe perpendiculaire à ladite extrémité libre et entraîné en rotation par un moteur relié à des moyens d'alimentation.

L'exploitation d'engins tels que des drones représente une activité en progression exponentielle à l'heure actuelle. Principalement dédiés à des fins militaires au départ, ces appareils s'imposent à présent également dans le domaine civil. Ainsi, pas moins de deux cent nouvelles applications ont été décrites en trois ans et les usages pouvant être envisagés apparaissent sans limites.

A titre d'exemple, certains agriculteurs font d'ores et déjà appel aux drones pour surveiller leurs cultures et se basent sur les prises de vues aériennes obtenues pour identifier les actions à entreprendre et notamment déterminer très précisément les besoins en matière d'intrants. L'utilisation de drones se banalise également dans le domaine de la sécurité publique, où ils permettent aux forces de l'ordre de recourir à des prises de vues aériennes, par exemple de scènes de crime ou d'incendie, ou de zones frontalières, dans le cadre de leurs enquêtes. D'autres marchés, moins développés mais également très prometteurs, sont encore représentés par exemple par le domaine de l'immobilier, du génie civil ou du sauvetage en montagne.

Bien que de nombreuses innovations aient été réalisées ces dernières années en vue d'adapter les engins de types drones aux différentes applications civiles considérées, de nombreux inconvénients, apparaissant comme un frein à leur développement, subsistent encore.

En particulier, il a été constaté que la qualité des prises de vues aériennes obtenues par la mise en oeuvre de drones de type multicopter, n'était pas toujours satisfaisante en raison du caractère souvent instable du vol effectué. De ce fait, les images obtenues sont souvent imprécises et ne permettent pas de visualiser convenablement certains détails potentiellement importants. Une drone à voilure tournante de type tricopter est décrit dans le document US2012/0091257. D'autre part, les drones de type « aile delta » nécessitent beaucoup d'espace lors des phases de décollage et d'atterrissage, et impliquent un lancement à la main pouvant être à l'origine de blessures graves de l'opérateur. En outre, ils se caractérisent par une vitesse de vol linéaire qui les rend difficiles à piloter au cas où l'opérateur souhaite prendre la main durant une mission.

La présente invention a pour but de pallier ces différents inconvénients en proposant un drone utilisable quel que soit l'environnement et l'espace disponible, permettant un vol constamment à plat ainsi qu'un vol stationnaire avec une assiette à zéro degré ou inclinée permettant de garantir une excellente qualité de prises de vues ainsi que leur exhaustivité. Un autre but de la présente invention est de proposer un tel drone qui soit simple d'usage, d'un prix abordable et parfaitement sûr pour l'opérateur.

A cet effet, l'invention a pour objet un drone du genre indiqué en préambule, caractérisé en ce que lesdits bras sont montés pivotants sur ledit châssis, deux d'entre eux étant aptes à entraîner, de manière automatique, le rotor supporté par leur extrémité libre vers une position dans laquelle son axe forme un angle compris entre -30° et +150° avec le plan du châssis et le troisième d'entre eux étant apte à pivoter, si nécessaire, de manière automatique, vers une position dans laquelle son extrémité libre est écartée du troisième sommet considéré du triangle d'un angle compris entre -60° et +60°.

Une telle caractéristique est particulièrement avantageuse étant donné qu'elle permet un décollage et un atterrissage vertical du drone, les trois axes des rotors étant positionnés sensiblement verticalement lors de ces phases. Cette caractéristique permet également d'effectuer, en dehors des phases de décollage et d'atterrissage, un vol avec un aérodynamisme d'avion grâce notamment à la portance de son enveloppe, parfaitement stable et constamment plat pendant toute sa durée, les axes de deux des rotors étant positionnés sensiblement horizontalement et le troisième rotor étant apte à se déplacer dans une certaine mesure vers la gauche ou la droite dans un plan sensiblement horizontal pour stabiliser l'engin. Ceci permet à la fois de s'affranchir de l'espace important nécessaire aux drones de type « aile delta » puis d'effectuer des prises de vues parfaitement planes de qualité irréprochable.

Conformément à une caractéristique du drone selon l'invention, chacun desdits bras est actionné par un servomoteur relié auxdits moyens d'alimentation.

Par ailleurs, chaque servomoteur commande un bras au moyen d'entretoises comportant des roulements à billes.

Selon une variante de réalisation préférentielle de l'invention, ledit châssis est défini par un cadre délimitant un logement pour au moins un accessoire destiné à être embarqué dans ledit drone.

Le drone selon l'invention peut en outre comporter une enveloppe recouvrant le châssis.

Dans ce cas, ladite enveloppe comporte de préférence deux parties latérales définissant des ailes et un corps central présentant une face supérieure et une face inférieure pourvue d'une ouverture d'accès audit logement.

La présente invention prévoit également la possibilité d'équiper le drone de bras présentant des longueurs différentes.

Lesdits bras peuvent également comporter des moyens aptes à permettre leur interchangeabilité.

La présente invention sera mieux comprise à la lecture de la description d'un exemple de réalisation faite en référence aux figures annexées, dans lesquelles :
- La figure 1 illustre une vue de dessus d'un drone selon l'invention, revêtu d'une enveloppe, ses rotors étant disposés dans la configuration dans laquelle il présente un aérodynamisme d'avion en dehors des phases de décollage et d'atterrissage,
- La figure 2 illustre une vue de dessous du drone de la figure 1,
- La figure 3 illustre une vue de côté du drone de la figure 1, l'angle d'inclinaison d'un de ses rotors étant modifié,
- La figure 4 représente une vue de dessus du drone de la figure 1 dépourvu de son enveloppe et de ses rotors,

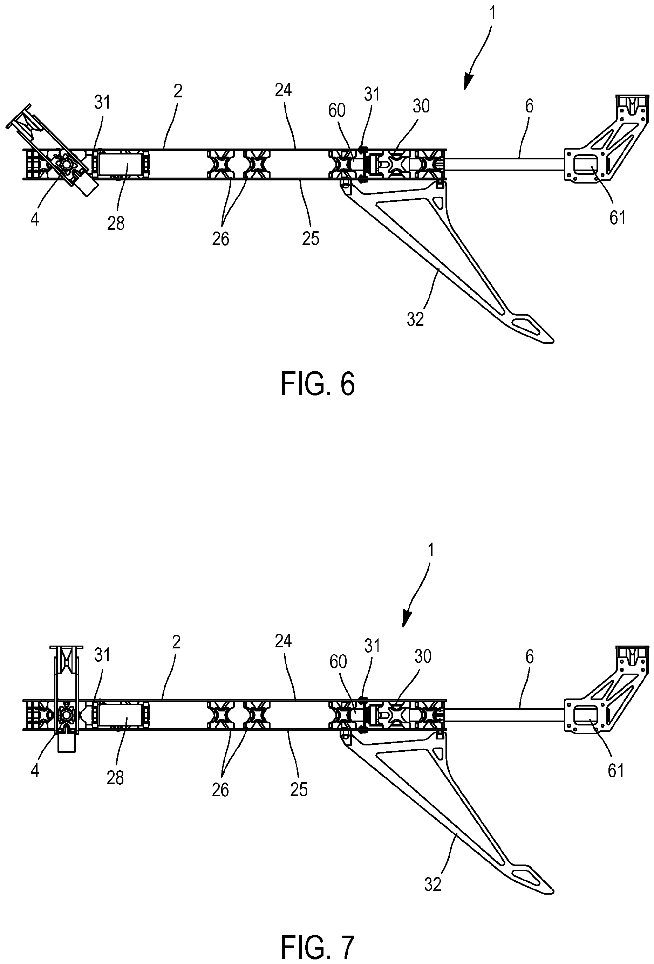

- Les figures 5 à 7 sont des vues de côtés du drone de la figure 1 sans son enveloppe et sans ses rotors, illustrant différentes inclinaisons possibles de ses rotors, et

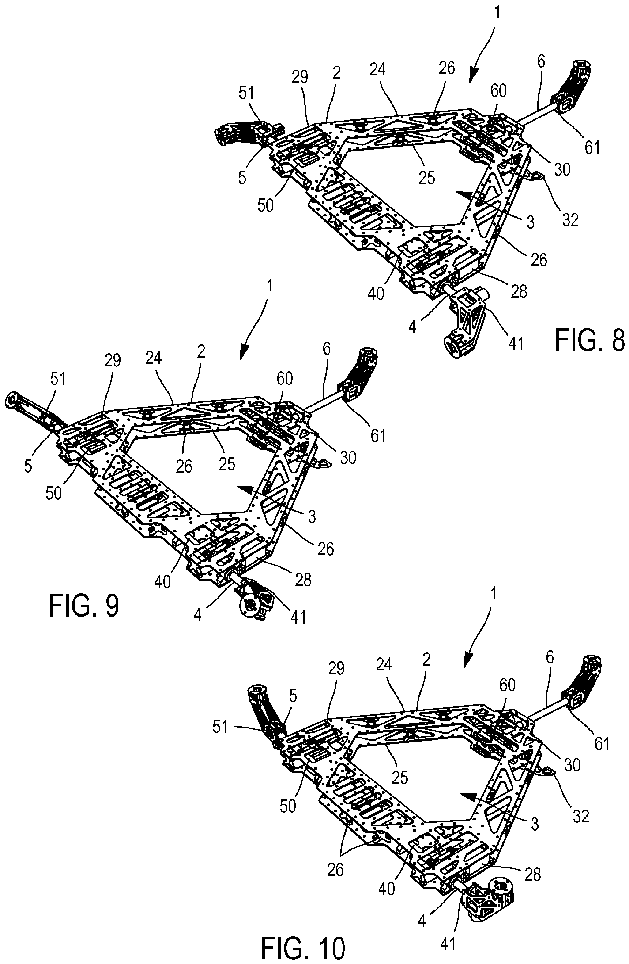

- Les figures 8 à 10 sont des vues en perspective de dessus du drone de la figure 1 sans son enveloppe et sans ses rotors, illustrant différentes inclinaisons de ses rotors.

En référence aux figures, la présente invention a pour objet un drone 1, de type tricopter, destiné à être envoyé au sein d'un espace géographique, par exemple pour survoler une zone géographique présentant un intérêt particulier, en vue de réaliser des prises de vues photographiques de ladite zone.

Le drone 1 selon l'invention comporte un châssis 2, de préférence en carbone et/ou en un matériau plastique ou composite ou tout matériau équivalent à la fois léger et résistant aux éventuels chocs. Dans la variante de réalisation illustrée, le châssis 2 est défini par deux plaques identiques 24, 25, se faisant face, reliées entre elles par une pluralité d'entretoises 26 et formant un cadre, par exemple de forme sensiblement triangulaire, délimitant en son centre un logement 3.

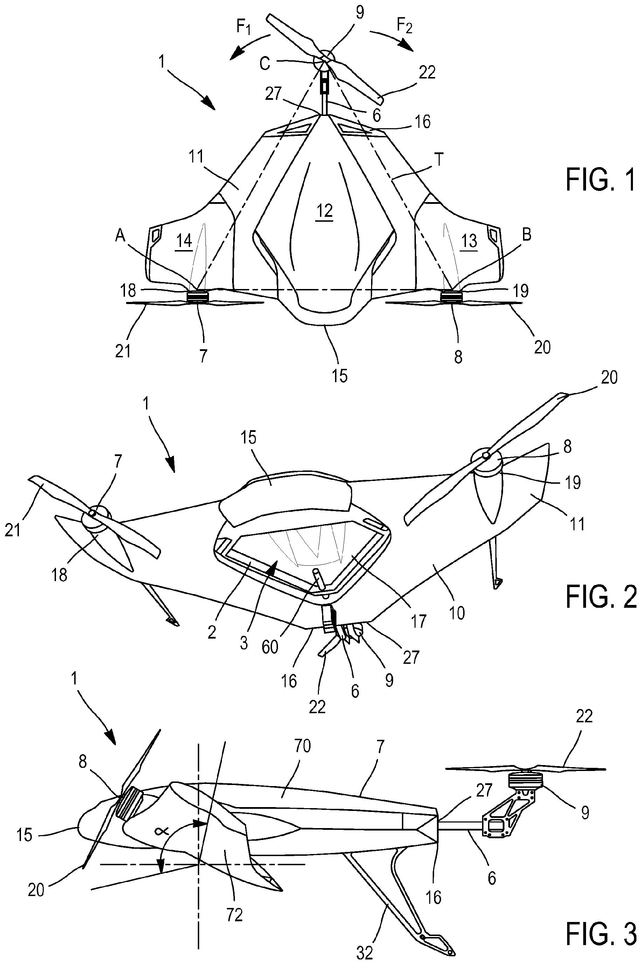

Trois bras 4, 5, 6 préférentiellement en carbone et/ou en un matériau plastique ou composite ou tout matériau équivalent, sont reliés par l'une de leurs extrémités 40, 50, 60 au châssis 2, de manière telle qu'ils s'étendent dans le plan du châssis 2 et que leurs extrémités libres 41, 51, 61 se situent chacune à un sommet A, B, C d'un triangle imaginaire T (cf. fig. 1) dont la longueur des côtés est par exemple comprise entre 500mm et 900mm. Bien entendu, de telles dimensions ne sont indiquées qu'à titre d'exemple et peuvent tout à fait être modifiées en vue de fournir un drone 1 selon l'invention d'une emprise différente, adaptée à l'application considérée.

De manière classique, chaque extrémité libre 41, 51, 61 d'un bras 4, 5, 6 est solidaire d'un rotor 7, 8, 9, d'axe perpendiculaire audit bras 4, 5, 6, comportant des pales 20, 21, 22, et entraîné en rotation par un moteur relié à une batterie (non illustrés) hébergés dans le drone 1.

D'autre part, le châssis 2 est revêtu d'une enveloppe 11, par exemple en PPE, ou en un matériau plastique ou composite de propriété équivalentes, formant un corps central 12 d'où s'étendent deux ailes latérales 13, 14.

Le corps central 12 présente un nez 15 et une queue 16. Cette dernière comporte un orifice 27 dont émerge au moins partiellement le bras 6, s'étendant vers l'arrière du drone 1 en mouvement, et dont l'extrémité libre 61 est solidaire du rotor 9.

La face inférieure 10 du corps central 12 comporte une ouverture 17 ménageant un accès au logement 3 du châssis 2, et qui permet d'héberger des accessoires du drone 1, tels que notamment des moyens électroniques de commande, des capteurs spécifiques, des moyens d'alimentation, etc., choisis en fonction des besoins. Le cas échéant, le logement 3 peut être refermé au moyen d'un cache (non illustré) obturant l'ouverture 17. Il offre alors avantageusement une parfaite protection aux accessoires qui y sont reçus, y compris lors de l'atterrissage ou en cas de chute intempestive du drone 1.

L'enveloppe 7 comporte également deux ailes latérales 71, 72, indépendantes du corps central 12 et recouvrant les deux bras 4, 5 s'étendant à l'avant du drone 1 en mouvement. En fait, le chant avant de chacune des ailes 13, 14 comporte un orifice 18, 19 pour le passage de l'axe des rotors 7, 8 solidaires des extrémités libres 41, 51 des bras 4, 5.

Le drone 1 selon l'invention comporte également un pied 32 fixé sous sa queue 16 et permettant de le faire reposer sur un support, par exemple sur le sol après son atterrissage.

Conformément à l'invention, les bras 4, 5, 6 sont montés pivotants par rapport au châssis 2 et sont reliés chacun par leurs extrémités 40, 50, 60 à un servomoteur 28, 29, 30, asservi aux moyens de commande électroniques du drone 1. En fait, les servomoteurs 28, 29, 30 sont logés entre les plaques 24, 25 formant le châssis 2. Ils commandent les bras 4, 5, 6 par l'intermédiaire d'entretoises équipées de roulement à billes. Avantageusement, les bras 4, 5, 6 sont ainsi prévus aptes à pivoter, de manière automatique et notamment en fonction des informations relevées par les capteurs dont le drone 1 est équipé, entre différentes positions en entraînant dans leur rotation les rotors 7, 8, 9 qu'ils supportent.

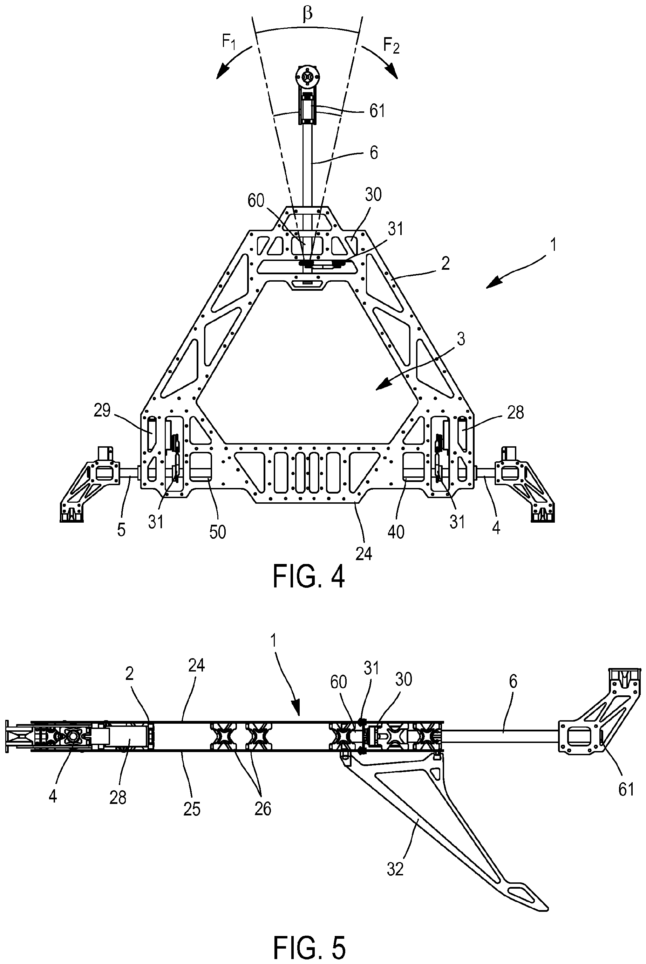

En fait, la présente invention a prévu que les bras 4, 5 sont aptes à pivoter de manière à entraîner le rotor 7, 8 supporté par leur extrémité libre 41, 51 vers toute position dans laquelle l'axe dudit rotor 7, 8 forme un angle α compris entre -**30°** et +150° avec le plan du châssis 2 tandis que le bras 6 est apte à pivoter, si nécessaire, dans le sens des flèches F1 et F2 (cf. fig. 1 et 4) vers une position dans laquelle son extrémité libre 61 est écartée du sommet C considéré du triangle T d'un angle β compris entre -60° et +60°.

Grâce à une telle caractéristique, les axes des rotors 7, 8, 9 du drone 1 sont automatiquement orientés en fonction des impératifs du vol, de manière à garantir la planéité de celui-ci à chaque instant, en dehors des phases de décollage et d'atterrissage.

Par ailleurs, afin de disposer d'un décollage et d'un atterrissage vertical, permettant une économie d'espace, il est prévu, lors de ces phases, de placer automatiquement les axes des rotors 7, 8 sensiblement perpendiculairement au plan du châssis 2 lui-même alors sensiblement horizontal. Par conséquent, lors des phases de décollage et d'atterrissage, les axes des trois rotors 7, 8, 9 sont sensiblement verticaux et leurs pales 20, 21, 22 tournent dans des plans sensiblement horizontaux.

Après le décollage, lorsque l'altitude souhaitée est atteinte, les axes des rotors 7, 8 sont placés automatiquement et de manière progressive, via une rotation appropriée des bras 4, 5, parallèlement au plan du châssis 2, c'est-à-dire sensiblement horizontalement. Dans cette position, les pales 20, 21 tournent dans des plans sensiblement verticaux et le drone 1 adopte un aérodynamisme d'avion améliorant sa portance et augmentant son autonomie, les ailes latérales 13, 14 s'étendant dans le plan du corps central 12. Le drone 1 selon l'invention comporte en outre des moyens, mécaniques et électroniques, permettant de garantir que le basculement entre la position permettant un décollage vertical et la position permettant un déplacement en translation horizontale s'effectue de manière progressive, car la portance doit alors être transférée des rotors 7, 8, 9 aux ailes latérales 13, 14. Or, ces dernières ne jouent leur rôle qu'à partir du moment où le drone 1 a atteint une certaine vitesse horizontale.

Afin de maintenir la position souhaitée du drone 1, les angles α et β peuvent être modifiés en cours de vol, à partir des informations collectées à chaque instant par les capteurs embarqués (accéléromètres, gyroscopes, compas) et traitées par les moyens de commande électroniques. Il est à noter que l'angle α formé par l'axe du rotor 7 avec le plan du châssis 2 peut être différent de celui formé par l'axe du rotor 8 avec ce même plan. Une telle caractéristique permet d'obtenir un vol stationnaire avec une assiette inclinée et par conséquent d'effectuer des prises de vues de parfaite qualité d'édifices tels que notamment des ponts par le dessous.

Dans certaines variantes de réalisation, le drone 1 selon l'invention peut être équipé de bras 4, 5, 6 simplement clipsés sur le châssis 2 ne nécessitant aucun outil pour les opérations de montage ou démontage. Ceci permet leur interchangeabilité, par exemple en cas d'avarie. De plus, bien que dans l'exemple décrit les bras 4, 5, 6 présentent une longueur identique, il est tout à fait envisageable d'équiper le drone 1 de bras 4, 5, 6 se différenciant entre eux par leur longueur, ce qui améliore sa flexibilité.

Bien entendu, de nombreuses modifications peuvent être apportées aux exemples décrits ci-dessus sans sortir du cadre de la présente invention.

## Revendications

1. Drone (1) à voilure tournante de type tricopter comportant trois bras (4, 5, 6) reliés à un châssis (2) par l'une de leurs extrémités (40, 50, 60) et s'étendant dans le plan du châssis (2) selon une configuration dans laquelle leurs extrémités libres (41, 51, 61) se situent chacune à un sommet (A, B, C) d'un triangle (T), chacune des extrémités libres (41, 51, 61) supportant un rotor (7, 8, 9) d'axe perpendiculaire à ladite extrémité libre (41, 51, 61) et entraîné en rotation par un moteur relié à des moyens d'alimentation, **caractérisé en ce que** lesdits bras (4, 5, 6) sont montés pivotants sur ledit châssis (2), deux d'entre eux étant aptes à entraîner, de manière automatique, le rotor (7, 8) supporté par leur extrémité libre (41, 51) vers une position dans laquelle son axe forme un angle α compris entre -30° et +150° avec le plan du châssis (2) et le troisième d'entre eux étant apte à pivoter, si nécessaire, de manière automatique, vers une position dans laquelle son extrémité libre (61) est écartée du troisième sommet (C) considéré du triangle (T) d'un angle β compris entre -60° et +60°.

2. Drone (1) selon la revendication 1, **caractérisé en ce que** chacun desdits bras (4, 5, 6) est actionné par un servomoteur (28, 29, 30) relié auxdits moyens d'alimentation.

3. Drone (1) selon la revendication 2, **caractérisé en ce que** chaque servomoteur (28, 29, 30) commande un bras (4, 5, 6) au moyen d'entretoises (31) comportant des roulements à billes.

4. Drone (1) selon l'une quelconque des revendications précédentes, **caractérisé en ce que** ledit châssis (2) est défini par un cadre délimitant un logement (3) pour au moins un accessoire destiné à être embarqué dans ledit drone (1).

5. Drone (1) selon l'une quelconque des revendications précédentes, **caractérisé en ce qu'**il comporte une enveloppe (11) recouvrant le châssis (2).

6. Drone (1) selon la revendication 5, **caractérisé en ce que** ladite enveloppe (11) comporte deux parties latérales définissant des ailes (13, 14) et un corps central (12) présentant une face supérieure et une face inférieure (10) pourvue d'une ouverture (17) d'accès audit logement (3).

7. Drone (1) selon l'une quelconque des revendications précédentes, **caractérisé en ce que** lesdits bras (4, 5, 6) ont des longueurs différentes.

8. Drone (1) selon l'une quelconque des revendications précédentes, **caractérisé en ce que** lesdits bras (4, 5, 6) comportent des moyens aptes à permettre leur interchangeabilité.

## Patentansprüche

1. Drohne (1) mit Drehflügel vom Typ Tricopter, aufweisend drei Arme (4, 5, 6), die mit einem Gestell (2) mit einem ihrer Enden (40, 50, 60) verbunden sind und sich in der Ebene des Gestells (2) gemäß einer Konfiguration erstrecken, in welcher sich ihre freien Enden (41, 51, 61) jeweils an einer Spitze (A, B, C) eines Dreiecks (T) befinden, wobei jedes der freien Enden (41, 51, 61) einen Rotor (7, 8, 9) trägt mit einer Achse, die senkrecht zum freien Ende (41, 51, 61) ist und rotierend von einem Motor angetrieben wird, der mit Versorgungsmitteln verbunden ist, **dadurch gekennzeichnet, dass** die Arme (4, 5, 6) schwenkbar auf dem Gestell (2) montiert sind, wobei zwei von ihnen imstande sind, den Rotor (7, 8) automatisch anzutreiben, der von ihrem freien Ende (41, 51) getragen wird, in einer Position, in welcher seine Achse einen Winkel α zwischen -30° und +150° inklusive mit der Ebene des Gestells (2) bildet, und der dritte von ihnen imstande ist, bei Notwendigkeit automatisch in eine Position zu schwenken, in welcher sein freies Ende (61) von der entsprechenden dritten Spitze (C) des Dreiecks (T) in einem Winkel β zwischen -60° und +60° inklusive beabstandet ist.

2. Drohne (1) nach Anspruch 1, **dadurch gekennzeichnet, dass** jeder der Arme (4, 5, 6) von einem Servomotor (28, 29, 30) betätigt wird, der mit den Versorgungsmitteln verbunden ist.

3. Drohne (1) nach Anspruch 2, **dadurch gekennzeichnet, dass** jeder Servomotor (28, 29, 30) einen Arm (4, 5, 6) mit Hilfe von Streben (31) steuert, die Kugellager aufweisen.

4. Drohne (1) nach einem der vorangehenden Ansprüche, **dadurch gekennzeichnet, dass** das Gestell (2) von einem Rahmen definiert ist, welcher eine Aufnahme (3) für mindestens ein Zubehör begrenzt, welches bestimmt ist, in die Drohne (1) eingesetzt zu sein.

5. Drohne (1) nach einem der vorangehenden Ansprüche, **dadurch gekennzeichnet, dass** sie eine Hülle (11) aufweist, welche das Gestell (2) abdeckt.

6. Drohne (1) nach Anspruch 5, **dadurch gekennzeichnet, dass** die Hülle (11) zwei seitliche Abschnitte aufweist, die Flügel (13, 14) definieren, und einen zentralen Körper (12), welcher eine obere Fläche und eine untere Fläche (10) mit einer Zugangsöffnung (17) zu der Aufnahme (3) aufweist.

7. Drohne (1) nach einem der vorangehenden Ansprüche, **dadurch gekennzeichnet, dass** die Arme (4, 5, 6) unterschiedliche Längen haben.

8. Drohne (1) nach einem der vorangehenden Ansprüche, **dadurch gekennzeichnet, dass** die Arme (4, 5, 6) Mittel aufweisen, die imstande sind, ihre Austauschbarkeit zu erlauben.

## Claims

1. A rotary-wing drone (1) of the tricopter type including three arms (4, 5, 6) connected to a chassis (2) by one of their ends (40, 50, 60) and extending in the plane of the chassis (2) according to a configuration in which their free ends (41, 51, 61) are each situated at an apex (A, B, C) of the triangle (T), each of the free ends (41, 51, 61) supporting a rotor (7, 8, 9) with an axis perpendicular to said free end (41, 51, 61) and rotated by a motor connected to power supply means, **characterized in that** said arms (4, 5, 6) are mounted pivoting on said chassis (2), two of them being able to drive, automatically, the rotor (7, 8) supported by their free end (41, 51) toward a position in which its axis forms an angle α comprised between -30° and +150° with the plane of the chassis (2) and the third of them being able to pivot, if necessary, automatically, toward a position in which its free end (61) is separated from the third considered apex (C) of the triangle (T) by an angle ß comprised between -60° and +60°.

2. The drone (1) according to claim 1, **characterized in that** each of said arms (4, 5, 6) is actuated by a servomotor (28, 29, 30) connected to said power supply means.

3. The drone (1) according to claim 2, **characterized in that** each servomotor (20, 29, 30) commands an arm (4, 5, 6) via spacers (31) including ball bearings.

4. The drone (1) according to any one of the preceding claims, **characterized in that** said chassis (2) is defined by a frame delimiting a housing (3) for at least one accessory designed to be placed on board said drone (1).

5. The drone (1) according to any one of the preceding claims, **characterized in that** it includes an enclosure (11) covering the chassis (2).

6. The drone (1) according to claim 5, **characterized in that** said enclosure (11) includes two lateral parts defining wings (13, 14) and a central body (12) having an upper face and a lower face (10) provided with an opening (17) for accessing said housing (3).

7. The drone (1) according to any one of the preceding claims, **characterized in that** said arms (4, 5, 6) have different lengths.

8. The drone (1) according to any one of the preceding claims, **characterized in that** said arms (4, 5, 6) include means able to allow their interchangeability.
